(19) Europäisches Patentamt
European Patent Office
Office européen des brevets

(11) **EP 1 394 234 B1**

(12) **EUROPÄISCHE PATENTSCHRIFT**

(45) Veröffentlichungstag und Bekanntmachung des Hinweises auf die Patenterteilung:
**26.04.2006 Patentblatt 2006/17**

(51) Int Cl.:
*C09K 3/22* (2006.01)  *C04B 24/16* (2006.01)
*C04B 24/22* (2006.01)  *C04B 103/30* (2006.01)

(21) Anmeldenummer: **03018631.6**

(22) Anmeldetag: **20.08.2003**

(54) **Staubreduzierte Luftporenbildner**

Dust reduced air entraining agent

Entraîneur d'air avec poussiérage reduit

(84) Benannte Vertragsstaaten:
**AT BE BG CH CY CZ DE DK EE ES FI FR GB GR HU IE IT LI LU MC NL PT RO SE SI SK TR**

(30) Priorität: **29.08.2002 DE 10239702**

(43) Veröffentlichungstag der Anmeldung:
**03.03.2004 Patentblatt 2004/10**

(73) Patentinhaber: **Cognis Deutschland GmbH & Co. KG**
**40789 Monheim (DE)**

(72) Erfinder:
• **Gress, Wolfgang**
**42111 Wuppertal (DE)**
• **Wollmann, Gerhard, Dr.**
**40723 Hilden (DE)**
• **Neumann, Ralf**
**42781 Haan (DE)**
• **van der Koelen, Thomas**
**45476 Mülheim (DE)**
• **Höfer, Rainer, Dr.**
**40477 Düsseldorf (DE)**
• **Schulte, Heinz-Günther, Dr.**
**45481 Mülheim (DE)**

(56) Entgegenhaltungen:
**EP-A- 0 403 974          EP-A- 1 201 619**
**EP-B- 0 752 977**

• **DATABASE WPI Section Ch, Week 198440 Derwent Publications Ltd., London, GB; Class A97, AN 1984-246029 XP002263515 & JP 59 146959 A (KAJIMA CORP), 23. August 1984 (1984-08-23)**

**Beschreibung**

**Gebiet der Erfindung**

Die Erfindung liegt auf dem Gebiet von Mörtel-, Gips- und Putzsysteinen, zementösen Massen, Beton und dergleichen und betrifft staubreduzierte Luftporenbildner für Mörtel-, Gips- und Putzsysteme, zementöse Massen, Beton und dergleichen.

**Stand der Technik**

Bei der Verarbeitung von Mörtel-, Gips- und Putzsystemen, zementösen Massen und Beton kommen die unterschiedlichsten Additive zum Einsatz. Ein besonders wichtiges Additiv sind Luftporenbildner. Diese dienen dazu, dass im verarbeiteten System Luftporen ausgebildet werden, um einerseits das System besser verarbeiten zu können und um andererseits dem fertigen Werkstoff bestimmte Eigenschaften zu verleihen. Die einschlägigen Zusammenhänge sind dem Fachmann bekannt.

Als Luftporenbildner werden in der Praxis besonders gern Tenside eingesetzt. Dies können anionische, nichtionische oder kationische Tenside sein. Beispiele für häufig zum Einsatz kommende Tenside sind etwa Alkalisalze von Harzsäuren, sulfonierte Harzsäuren, Alkylsulfonate, Alkylarylsulfonate, Olefinsulfonate und Salze von Fettsäuren. Aus **DE-C-40 35 236** ist $2KHSO_5$ x $KHSO_4$ x $K_2SO_4$ als Luftporenbildner bekannt, das sogenannte "Tripelsalz". Aus EP-B-752 977 sind Luftporenbildner bekannt, die aus dem Salz eines Kolophoniumharzes mit einem Aminoalkohol und Alkohol bestehen.

Aus **EP-A-352 583** sind Alkalisalze polymerer Carbonsäuren als Staubbindemittel für Beton im Trockenspritzverfahren bekannt. Dabei geht es darum, den in einer Betonmischung, überwiegend bestehend aus Zement und verschiedenen Sanden, vorhandenen anorganischen Feinstoffanteil möglichst wirksam zu binden. Dieser Feinstoffanteil ist selbstverständlich auf die Gesamtheit der in der Betonmischung vorhandenen Komponenten zurückzuführen.

Luftporenbildner sind in verschiedenen Angebotsformen im Handel erhältlich, hauptsächlich als Feststoff, als Flüssigkeit, wässrige Lösung oder als wässrige Dispersion.

Beispiele für häufig eingesetzte feste Luftporenbildner - worunter verstanden wird, dass es sich um Substanzen handelt, die bei 20 °C fest sind - sind etwa Na-Alkyl-Sulfate, wie z.B. Na-Lauryl-Sulfat, im Handel z. B. erhältlich von der Fa. Cognis unter dem Markennamen Texapon® K 12 P und Na-C 12-18-Alkyl-Sulfate.

**Beschreibung der Erfindung**

Bei 20 °C feste, pulverförmige Luftporenbildner sind für den Fachmann besonders attraktiv, da sie sich einerseits gut lange Zeit zersetzungsfrei lagern lassen und da sie im Vergleich zu wässrigen Angebotsformen wegen des geringeren Volumens deutliche Vorteile beim Transport aufweisen. Ein Nachteil dieser Art von Luftporenbildnern besteht darin, dass die darin enthaltenen Staubanteile die Handhabbarkeit erschweren. So sind beispielsweise die auf Grund ihrer anwendungstechnisch guten Eigenschaften sehr begehrten pulverförmigen Na-Alkylsulfate herstellungsbedingt sehr staubig, so dass sie - etwa beim Einsatz auf der Baustelle im Zuge ihrer Einarbeitung in Mörtel-, Gips- und Putzsysteme, zementöse Massen oder Beton - durch die geringste Luftströmung mitgetragen und im Arbeitsumfeld verteilt werden. Dies sollte jedoch aus Gründen des Arbeits- und Gesundheitsschutzes möglichst vermieden werden.

**Aufgabe** der vorliegenden Erfindung war es daher, bei 20 °C feste, pulverförmige Luftporenbildner für Mörtel-, Gips- und Putzsysteme, zementöse Massen, Beton und dergleichen, insbesondere solche aus der Klasse der Na-Alkylsulfate, in einer Angebotsform zur Verfügung zu stellen, die sich durch eine reduzierte Staubigkeit auszeichnen. Diese Angebotsform sollte bei Verarbeitung, Lagerung und Transport keine stabilen Klumpen bilden und frei fliessend sein. Die Angebotsform sollte sich ferner in trockene Mörtel-, Gips- und Putzsysteme, zementöse Massen, Beton und dergleichen gut einarbeiten und verteilen lassen. Des weiteren sollte die Angebotsform nicht zu einer Verschlechterung der anwendungstechnischen Eigenschaften von damit ausgerüsteten Mörtel-, Gips- und Putzsystemen, zementösen Massen, Beton und dergleichen führen.

Gegenstand der Erfindung sind **staubreduzierte Luftporenbildner** für Mörtel-, Gips- und Putzsysteme, zementöse Massen, Beton und dergleichen, wobei diese Luftporenbildner in Form von Agglomeraten vorliegen, die erhältlich sind, indem man einen bei 20 °C festen, pulverförmigen Luftporenbildner mit einem bei 20 °C flüssigen nichtionischen Tensid besprüht und das derart modifizierte Pulver innig durchmischt.

Die erfindungsgemäßen staubreduzierten Luftporenbildner zeichnen sich durch eine im Vergleich zu den zu ihrer Herstellung eingesetzten bei 20 °C festen, pulverförmigen Luftporenbildnern deutlich reduzierte Staubigkeit aus. Unter reduzierter Staubigkeit wird dabei verstanden, dass die Staubigkeit der erfindungsgemäßen staubreduzierten Luftporenbildner im Vergleich zu den zu ihrer Herstellung eingesetzten bei 20 °C festen, pulverförmigen Luftporenbildnern um mindestens 30% reduziert ist.

### Messung der Staubigkeit

Die Staubigkeit wird als **Staubwert** erfindungsgemäß wie folgt gemessen:
Eine Menge von 50 g der zu prüfenden Substanz wird innerhalb von 0,5 Minuten gleichmäßig und kontinuierlich aus einem Becherglas in einen Pulvertrichter geschüttet. Dabei handelt es sich um einen handelsüblichen Pulvertrichter aus Kunststoff mit folgenden Maßen: Oberer Durchmesser des konischen Teils = 80 mm; Länge des Auslaufteils = 25 mm; Durchmesser des Auslaufteils = 20 mm. Die Prüfsubstanz fällt aus der Auslauföffnung des Trichters in ein zylindrisches Gefäß mit einer Höhe von 370 mm und einem Durchmesser von 350 mm. Der Trichter ist mittels eines Stativs so befestigt, dass er mittig über dem Gefäß angebracht ist und der Fallweg der Prüfsubstanz (= Abstand vom Boden des Gefäßes bis zur Auslauföffnung des Trichters) 350 mm beträgt. Am Boden des Gefäßes steht mittig ein zylindrisches Auffanggefäß mit einer Höhe von 80 mm und einem des Öffnungsdurchmessers von 115 mm. Die Hauptmenge $m_{Nicht-Staub}$ an zu vermessender Prüfsubstanz fällt nun in das Auffanggefäß. Nur der Staubanteil $m_{Staub}$ fällt neben das Auffanggefäß. Nach 2 Minuten Absetzzeit werden die entsprechenden Gewichtsmengen durch Wägung bestimmt.

Der Staubwert der Probe ergibt sich als Verhältnis von Menge Substanz neben dem Auffanggefäß (= Staub) zu Gesamtmenge Substanz im Auffanggefäß (=Nicht-Staub) und neben dem Auffanggefäß (= Staub):

$$\text{Staubwert (\%)} = m_{Staub}/(m_{Nicht-Staub} + m_{Staub}) \times 100$$

### Vorteile der Erfindung

Die erfindungsgemäßen Agglomerate der staubreduzierten Luftporenbildner sind trocken, nicht klebrig, freifliessend und - gemäß der obigen Definition der Staubwertes - staubarm bzw. staubfrei. Sie bilden keine stabilen Klumpen. Bei der Herstellung in Mischern mit Sprühvorrichtung (siehe unten) bilden sich auch keine Anbackungen in den Mischern.

Beim Einsatz der erfindungsgemäßen Luftporenbildner mit reduzierten Staubwerten in Mörtel-, Gips- und Putzsystemen, zementösen Massen, Beton und dergleichen wurden im Vergleich zum Einsatz der entsprechenden nichtstaubreduzierten Luftporenbildner folgende Vorteile gefunden:

- Schnelle Luftporenbildung durch bessere Dispergierung des Luftporenbildners während des Vermischens mit Zement und Sand
- Gleichmäßigere Porenverteilung der Luftporen im Trockenputz
- Feinporigere Luftporen in den ausgehärteten Systemen mit vernetzter Schaumstruktur, mit der Wirkung einer geringeren Wärmeleitfähigkeit
- Höhere Festigkeit des trockenen Mörtels

### Luftporenbildner

Die Art der zur Herstellung der erfindungsgemäßen staubreduzierten Luftporenbildner einsetzbaren bei 20 °C festen, pulverförmigen Luftporenbildner ist an sich keinerlei Beschränkungen unterworfen. Insbesondere setzt man als Luftporenbildner 20 °C feste, pulverförmige Tenside ein, wobei anionische Tenside besonders bevorzugt sind. Beispiele für prinzipiell geeignete Luftporenbildner sind Na-Alkyl-Sulfate, Na-Alkyl-Benzol-Sulfonate und Naphthalin-Sulfonate, sofern sie die oben genannte Bedingung erfüllen, daß sie bei 20 °C fest und pulverförmig vorliegen.
Bei 20 °C feste, pulverförmige Na-Alkyl-Sulfate, insbesondere Na-Laurylsulfat, sind im Rahmen der vorliegenden Erfindung als Luftporenbildner ganz besonders bevorzugt.

### Bei 20 °C flüssige nichtionische Tenside

Wie bereits gesagt sind die erfindungsgemäßen staubreduzierte Luftporenbildner erhältlich, indem man einen bei 20 °C festen, pulverförmigen Luftporenbildner mit einem bei 20 °C flüssigen nichtionischen Tensid besprüht und das derart modifizierte Pulver innig durchmischt. Die nichtionischen Tenside können einzeln oder im Gemisch untereinander eingesetzt werden.

Beispiele besonders geeigneter erfindungsgemäß einzusetzender nichtionischer Tenside sind Anlagerungsprodukte von Ethylenoxid und/oder Propylenoxid an Fettalkohole mit 8 bis 24 C-Atomen, Alkylpolyglycoside, Polyethylenglykole und Polyglykolether. **Anlagerungsprodukte von Ethylenoxid und/oder Propylenoxid an Fettalkohole** werden vom Fachmann auch als Fettalkoholpolyglykolether bezeichnet. Erfindungsgemäß sind diejenigen bevorzugt, die durch die allgemeine Formel (I) charakterisiert sind:

$$R^1\text{-O-}(CH_2\text{- }CHR^2\text{-O})_q H \qquad (I)$$

Darin bedeuten $R^1$ einen linearen, gesättigten Alkylrest mit 8 bis 24 C-Atomen, der Rest $R^2$ Wasserstoff oder eine Methylgruppe und der Index q eine Zahl im Bereich von 1 bis 50. Aus der Gruppe der Verbindungen (I) sind die Fettalkoholethoxylate besonders bevorzugt, insbesondere Anlagerungsprodukte von 2 bis 20 Mol Ethylenoxid pro Mol Fettalkohol mit 12 bis 18 C-Atomen.

Alkylpolyglycoside lassen sich durch die allgemeine Struktur (II) charakterisieren:

$$R\text{-(G)}_p \qquad (II)$$

Darin bedeuten R einen linearen, gesättigten Alkylrest mit 8 bis 24 C-Atomen und (G)p ein Glycosid- oder Oligolycosid-Rest mit einem Oligomerisationsgrad x von 1 bis 10 ist. Alkylglycoside der angegebenen Formel (II) sind seit langem bekannte oberflächenaktive Stoffe, die aus Zuckern und aliphatischen, primären Alkoholen mit 8 bis 24 C-Atomen unter Acetalisierung herstellbar sind. Als Zuckerkomponente (Glycosen) kommen bevorzugt Glucose, daneben aber auch Fructose, Mannose, Galactose, Telose, Gulose, Allose, Altrose, Idose, Arabinose, Xylose, Lyxose, Libose und Gemische davon in Frage. Bevorzugt wegen der leichten Zugänglichkeit und der guten Anwendungseigenschaften sind die Acetalisierungsprodukte der Glucose mit Fettalkoholen, die beispielsweise aus natürlichen Fetten und Ölen nach bekannten Verfahren erhältlich sind, insbesondere mit linearen, primären, gesättigten und ungesättigten Fettalkoholen mit 8 bis 24 C-Atomen. Bezüglich des Glycosidrestes (G)p gilt, daß sowohl Monoglycoside (p = 1), bei denen ein Zuckerrest glycosidisch mit dem Fettalkohol verbunden ist, als auch oligomere Glycoside mit einem Oligomerisationsgrad p = 2 bis 10 geeignet sind. In der Regel liegen Gemische von Mono- und Oligoglycosiden vor. Bevorzugt geeignet sind solche Alkylglycoside (IV), in welcher R eine Alkylgruppe mit 8 bis 24 C-Atomen und (G)p ein Glycosid- oder Oligoglycosidrest mit einem Oligomerisationsgrad p = 1 bis 10 ist. Ganz besonders bevorzugt ist R dabei eine Alkylgruppe mit 8 bis 14 C-Atomen. Der mittlere Oligomerisationsgrad liegt vorzugsweise im Bereich von 1 bis 1,5.

**Polyethylenglykole und Polyglykolether** sind dem Fachmann bekannt. Sie sind erhältlich durch Ethoxylierung von 1,2- oder 1,3-Propandiol, 1,2- oder 1,4-Butandiol, Hexandiol, Glycerin, Trimethylolpropan oder Pentaerythrit. Im Rahmen der vorliegenden Erfindung werden insbesondere solche Polyethylenglykole und Polyglykolether eingesetzt, deren mittlere Molmasse im Bereich von 200 bis 5000, vorzugsweise 200 bis 3000 liegt.

## Das Aufsprühen der nichtionischen Tenside

Die zum Einsatz kommenden der bei 20 °C flüssigen nichtionischen Tenside werden vorzugsweise in einer Menge von 0,1 bis 6 Gew.-% Aktivsubstanz - bezogen auf die Gesamtmenge der eingesetzten bei 20 °C festen, pulverförmigen Luftporenbildner - auf die bei 20 °C festen, pulverförmigen Luftporenbildner aufgesprüht. Ganz besonders bevorzugt ist es dabei, die nichtionischen Tenside in einer Menge von 0,1 bis 3 Gew.-% auf die bei 20 °C festen, pulverförmigen Luftporenbildner aufzusprühen. Die Mengenangaben bezüglich der nichtionischen Tenside beziehen sich stets auf die Menge an Aktivsubstanz, d.h. auf die Menge der nichtionischen Tenside als solche. Die bei 20 °C flüssigen nichtionischen Tenside können als solche, gewünschtenfalls aber auch in Form ihrer wässrigen Lösungen oder Dispersionen aufgesprüht werden, im letztgenannten Fall vorzugsweise in Form von 20 bis 60 Gew.-%-igen wässrigen Lösungen bzw. Dispersionen.

Das Aufbringen von wässrigen Lösungen bzw. Dispersionen der nichtionischen Tenside auf die festen, pulverförmigen Luftporenbildner durch Aufsprühen hat den Vorteil, dass das Wasser in den Lösungen bzw. Dispersionen die Oberfläche des Pulvers befeuchtet und anlöst, so dass die nichtionischen Tenside an der Oberfläche des Pulvers besser anhaften können und eine Agglomeratbildung zwischen benachbarten Partikeln weiter begünstigen.

Die Art des Aufsprühens der nichtionischen Tenside - als solche oder in Form ihrer wässrigen Lösungen bzw. Dispersionen - auf die festen, pulverförmigen Luftporenbildner ist an sich nicht kritisch. Hier können im Prinzip alle dem Fachmann einschlägig bekannten Techniken herangezogen werden. In einer bevorzugten Variante werden hierbei Mischer eingesetzt, die so ausgerüstet sind, dass sie eine Sprühvorrichtung aufweisen. Derartige Mischer sind etwa:

Mischer mit aufwirbelnden Mischorganen und Sprühvorrichtung: Horizontale Pflugscharmischer z.B. der Fa. Lödige und der Fa. Gericke; vertikale Schleudermischer z.B. der Fa. Papenmeier. Die genannten Lödige-Mischer sind im Rahmen der Erfindung besonders geeignet.

Mischer mit abwälzenden Mischorganen und Sprühvorrichtung: Kegelmischer z.B. Nauta-Intensifier der Fa. Hosokawa Micron; Schneckenbandmischer z.B. der Fa. Ruberg.

Bedingt geeignet sind luftdurchströmte Mischer wie z. B. Wirbelschichten der Fa. Glatt oder Hosokawa Micron BV.

Das Aufsprühen der nichtionischen Tenside - als solche oder in Form ihrer wässrigen Lösungen bzw. Dispersionen - auf die festen, pulverförmigen Luftporenbildner und das Durchmischen des derart modifizierten Pulvers werden vorzugsweise gleichzeitig durchgeführt. Dies ist durch den Einsatz der genannten Mischer mit Sprühvorrichtung gewährleistet.

In einer Ausführungsform werden die zum Einsatz kommenden nichtionischen Tenside in Kombination mit Kieselsäure und/oder Cellulose auf die bei 20 °C festen, pulverförmigen Luftporenbildner aufgesprüht.

Beim Einsatz der mit Cellulose zusätzlich ausgerüsteten erfindungsgemäßen Luftporenbildner mit reduzierten Staubwerten in Mörtel-, Gips- und Putzsystemen, zementösen Massen, Beton und dergleichen wurden im Vergleich zum Einsatz der entsprechenden nicht-Cellulose-haltigen staubreduzierten Luftporenbildner folgende Vorteile gefunden: bessere Vernetzung und höhere Scherstabilität von trockenem Mörtel.

**Weitere Erfindungsgegenstände**

Ein weiterer Gegenstand der Erfindung ist ein Verfahren zur Herstellung von staubreduzierten Luftporenbildnern für Mörtel-, Gips- und Putzsysteme, zementöse Massen, Beton und dergleichen, wobei man einen bei 20 °C festen, pulverförmigen Luftporenbildner mit einem bei 20 °C flüssigen nichtionischen Tensid besprüht und das derart modifizierte Pulver innig durchmischt.

Nach dem erfindungsgemäßen Verfahren sind u.a. staubreduzierte Tensidpulver in Form von Agglomeraten zugänglich. Diese können im Prinzip überall dort eingesetzt werden, wo es im Zuge der Verarbeitung von Tensidpulvern darauf ankommt, dass diese Pulver in einer staubreduzierten Form vorliegen. Beispielsweise kann dies beim Einsatz von Tensidpulvern der Fall sein, die im Zuge der Emulsionspolymerisation als Emulgatoren bzw. Dispergatoren eingesetzt werden.

Im Sinne der vorliegenden Erfindung ist jedoch die Verwendung von staubreduzierten Tensidpulvern als Luftporenbildnern für Mörtel-, Gips- und Putzsysteme, zementöse Massen, Beton und dergleichen, besonders bevorzugt. Ein weiterer Gegenstand der Erfindung ist dementsprechend die Verwendung von staubreduzierten Tensidpulvern, die erhältlich sind, indem man ein bei 20 °C festes, pulverförmiges Tensid mit einem bei 20 °C flüssigen nichtionischen Tensid besprüht und das derart modifizierte Pulver innig durchmischt, als staubreduzierte Luftporenbildner für Mörtel-, Gips- und Putzsysteme, zementöse Massen, Beton und dergleichen.

Ein weiterer Gegenstand der Erfindung ist die Verwendung von bei 20 °C flüssigen nichtionischen Tensiden als staubbindenden Zusatz für Luftporenbildner für Mörtel-, Gips- und Putzsysteme, zementöse Massen, Beton und dergleichen.

**Beispiele**

**1. Eingesetzte Substanzen**

1.1. Unbehandelter, nicht-erfindungsgemäßer Luftporenbildner:

**Texapon K12** = pulverförmiges Natriumlaurylsulfat (Texapon K12® ;Fa. Cognis)

1.2. Binder:

**Dehydol LT 7** = Anlagerungsprodukt von 7 mol Ethylenoxid an 1 mol eines $C_{12-18}$-Fettalkolgemisches (Dehydol LT 7®; Fa. Cognis)
**PEG 3000** = Polyethylenglykol mit einem mittleren Molgewicht von 3000 (PEG 3000®; Fa. Degussa-Hüls)
**APG 220** = Alkylpolyglucosid (APG 220®; Fa. Cognis)

**2. Meßmethoden**

**2.1. Staubwerte**

Die Bestimmung der Staubwerte erfolgte wie oben in der Beschreibung im Kapitel "Messung der Staubigkeit" angegeben.

**2.2. Drucktest**

Bei Lagerung und Transport in Säcken und Big-Bags unterliegen die Agglomerate Druckbelastungen. Um unter Druckbelastung die Neigung des Ausquetschens des Binders und die Neigung zum Verklumpen zu testen, wurden die Agglomerate im Probeglas (80 mm Durchmesser) mit einem Gewicht (4,6 kg) mehrere Stunden lang belastet. Dies entspricht einer Druckbelastung von 915 kg/m$^2$.
Generell war beim Einsatz der erfindungsgemäßen Agglomerate gemäß den Beispielen festzustellen, dass sich Kompaktate durch die Druckbelastung Kompaktate gebildet hatten; diese zerfielen jedoch wieder, wenn das Glas mit den Kompaktaten kurz auf den Tisch gestoßen wurde und dabei eine geringe Menge an mechanischer Energie zugeführt wurde. Die Agglomerate flossen klumpenfrei und nahezu staubfrei aus dem Probeglas wieder heraus.

## 2.3. Anwendungstechnische Untersuchungen

Mit Texapon K12 sowie mit den erfindungsgemäßen staubreduzierten Luftporenbildnern (Agglomeraten) gemäß den Beispielen wurden auch anwendungstechnische Tests in Mörtelmischungen durchgeführt. Die Einzelheiten waren wie folgt.

Herstellen eines Trocken-Mörtel Putzes (Vormischung)

Putzmörtel nach DIN 18550, Mörtelklasse P III b:

250 g Portlandzement DIN CEM I 52,5 R
750 g Flaesheimer Mörtelsand (getrocknet)
0, 1 g Texapon K 12 (gemäß dem Vergleichsbeispiel) bzw.
Texapon K12-Agglomerat (gemäß den erfindungsgemäßen Beispielen)

Herstellung einer feuchten Mischung

1000,1 g der vorstehend genannten Vormischung
167 g Wasser

im Mörtelmischer nach DIN EN 196 (Hobartmischer) und Mischzeit 3min/Stufe 1

**Messung des Luftporengehaltes** in einem Druckausgleichsverfahren im Luftgehaltsprüfer nach DIN 18555. Es wurden 750 cm$^3$ feuchter Mörtel vorgelegt und der verbleibende Hohlraum des Gefäßes mit Wasser gefüllt. Anschließend wurde der Druck im Gefäß erhöht (= Aufgabe eines definierten Prüfdruckes). Dadurch wird bewirkt, dass das Wasser in die Luftporen des Mörtels gedrückt wird. Nach Entspannen war die Druckabnahme ein Mass für den Luftporengehalt.

**Messung des Erstarrungsverhaltens** im Nadelgerät nach Vicat, DIN EN 196 Teil 3 (Zementerstarrung). Zur Messung des Erstarrungsverhaltens wird der Erstarrungsbeginn und das Erstarrungsende gemessen.

**Messung des Erstarrungsbeginns:** Eine Nadel wird immer wieder in den feuchten Mörtel bis zum Boden hineinfallen gelassen. Sobald die Erstarrung beginnt, nimmt die Fallhöhe ab. Der Zeitpunkt wird als Erstarrungsbeginn definiert, wenn die Falltiefe der Nadel um 5 mm geringer ist als die Probenhöhe

Messung des Erstarrungsendes: Eine Nadel mit ringförmigem Ansatz wird auf die erstarrende Oberfläche aufgesetzt. Der Zeitpunkt wird als Erstarrungsende bezeichnet sobald so bald nur noch die Nadelspitze eindringt und der ringförmige Ansatz keinen Eindruck mehr hinterlässt.

**Vergleichs-Beispiel**

Texapon K12 war lagerungsbedingt im Sack schon leicht klumpig. Beim geöffneten Sack nahm durch Hydrophobie die Klumpigkeit mit der Zeit zu. Texapon K12 ließ sich nur mit hoher Staubbildung umschütten. Es hatte eine Schüttdichte von 285 kg/m$^3$.
Der Staubwert betrug 7,7 %.
Beim Drucktest bildete sich unter dem Stempel ein Kompaktat, das unter leichtem Zerreiben mit viel Staub wieder zerfiel.

Nach dem Luftporentest hatte der feuchte Mörtel eine Dichte von 1640 kg/m3. Der Luftporengehalt betrug nach der ersten Entlastung im Mittel 21 %. Der Luftporengehalt lag nach 10 Minuten bei 19,5 % und nach 15 Minuten bei 19,0 %. Die Dichte stieg auf 1670 kg/m$^3$ an. Der Erstarrungsbeginn des Mörtels erfolgte nach 5 h : 10 min. Das Erstarrungsende wurde nach 5 h : 30 min gemessen.

**Beispiel 1**

Analog zu Beispiel 1 wurden 500 g Texapon K12 vorgelegt und innerhalb von 1 Minute 12,5 g Dehydol LT 7 zudosiert. Anschließend wurde noch 2 Minuten nachgemischt. Die Proben waren staubarm. Der Staubwert betrug 1,8 %. Die Schüttdichte betrug 262 kg/m$^3$.

**Beispiel 2**

Analog zu Beispiel 1 wurden 500 g Texapon K12 vorgelegt und innerhalb von 1 Minute 12,5 g PEG 3000 zudosiert. Anschließend wurde noch 2 Minuten nachgemischt. Die Proben waren staubarm. Der Staubwert betrug 2,8 %. Die Schüttdichte betrug 285 kg/m$^3$.

**Beispiel 3**

Analog zu Beispiel 1 wurden 500 g Texapon K12 vorgelegt und innerhalb von 1 Minute 12,5 g Dehydol LT 7 zudosiert. Anschließend wurde noch 2 Minuten nachgemischt. Die Proben waren staubarm. Der Staubwert betrug 4,8 %. Die Schüttdichte betrug 265 kg/m$^3$.

**Patentansprüche**

1. Staubreduzierte Luftporenbildner für Mörtel-, Gips- und Putzsysteme, zementöse Massen, Beton und dergleichen, **dadurch gekennzeichnet, dass** diese Luftporenbildner in Form von Agglomeraten vorliegen, die erhältlich sind, indem man einen bei 20 °C festen, pulverförmigen Luftporenbildner mit einem bei 20 °C flüssigen nichtionischen Tensid besprüht und das derart modifizierte Pulver innig durchmischt.

2. Staubreduzierte Luftporenbildner nach Anspruch 1, wobei die bei 20 °C festen, pulverförmigen Luftporenbildner ausgewählt werden aus der Gruppe der Na-Alkyl-Sulfate, Na-Alkyl-Benzol-Sulfonate und Naphthalin-Sulfonate.

3. Staubreduzierte Luftporenbildner nach Anspruch 1, wobei man als bei 20 °C festen, pulverförmigen Luftporenbildner Na-Laurylsulfat einsetzt.

4. Staubreduzierte Luftporenbildner nach einem der Ansprüche 1 bis 3, wobei man die bei 20 °C flüssigen nichtionischen Tenside auswählt aus der Gruppe der Anlagerungsprodukte von Ethylenoxid und/oder Propylenoxid an Fettalkohole mit 8 bis 24 C-Atomen, Alkylpolyglycoside, Polyethylenglykole und Polyglykolether.

5. Verfahren zur Herstellung von staubreduzierten Luftporenbildnern für Mörtel-, Gips- und Putzsysteme, zementöse Massen, Beton und dergleichen, **dadurch gekennzeichnet, dass** man einen bei 20 °C festen, pulverförmigen Luftporenbildner mit einem bei 20 °C flüssigen nichtionischen Tensid besprüht und das derart modifizierte Pulver innig durchmischt.

6. Verfahren nach Anspruch 5, wobei man Besprühen und Durchmischen gleichzeitig mittels Mischern mit aufwirbelnden Mischorganen und Sprühvorrichtung durchführt.

7. Verwendung von staubreduzierten Tensidpulvern, die erhältlich sind, indem man ein bei 20 °C festes, pulverförmiges Tensid mit einem bei 20 °C flüssigen nichtionischen Tensid besprüht und das derart modifizierte Pulver innig durchmischt, als staubreduzierte Luftporenbildner für Mörtel-, Gips- und Putzsysteme, zementöse Massen, Beton und dergleichen.

8. Verwendung von bei 20 °C flüssigen nichtionischen Tensiden als staubbindenden Zusatz für Luftporenbildner für Mörtel-, Gips- und Putzsysteme, zementöse Massen, Beton und dergleichen.

**Claims**

1. Dust-reduced air entraining agents for mortar, gypsum and plaster systems, cement-containing compositions, concrete and the like, **characterized in that** the air entraining agents are present in the form of agglomerates which can be obtained by spraying a powder-form air entraining agent solid at 20°C with a nonionic surfactant liquid at 20°C and thoroughly mixing the powder thus moistened.

2. Dust-reduced air entraining agents as claimed in claim 1, **characterized in that** the powder-form air entraining agents solid at 20°C are selected from the group consisting of Na alkyl sulfates, Na alkyl benzenesulfonates and naphthalene sulfonates.

**3.** Dust-reduced air entraining agents as claimed in claim 1, **characterized in that** Na lauryl sulfate is used as the powder-form air entraining agent solid at 20°C.

**4.** Dust-reduced air entraining agents as claimed in any of claims 1 to 3, **characterized in that** the nonionic surfactants liquid at 20°C are selected from the group consisting of products of the addition of ethylene oxide and/or propylene oxide onto $C_{8-24}$ fatty alcohols, alkyl polyglycosides, polyethylene glycols and polyglycol ethers.

**5.** A process for the production of dust-reduced air entraining agents for mortar, gypsum and plaster systems, cement-containing compositions, concrete and the like, **characterized in that** a powder-form air entraining agent solid at 20°C is sprayed with a nonionic surfactant liquid at 20°C and the powder thus moistened is thoroughly mixed.

**6.** A process as claimed in claim 5, **characterized in that** the spraying and mixing steps are carried out simultaneously using mixers with turbulence-generating mixing elements and a spray unit.

**7.** The use of dust-reduced surfactant powders obtainable by spraying a powder-form surfactant solid at 20°C with a nonionic surfactant liquid at 20°C and thoroughly mixing the powder thus moistened, as dust-reduced air entraining agents for mortar, gypsum and plaster systems, cement-containing compositions, concrete and the like.

**8.** The use of nonionic surfactants liquid at 20°C as a dust-binding additive for air entraining agents for mortar, gypsum and plaster systems, cement-containing compositions, concrete and the like.

## Revendications

**1.** Entraîneur d'air avec poussiérage réduit pour systèmes de mortier, de plâtre et d'enduit, masses de ciments, béton et similaires,
**caractérisé en ce qu'**
il est en forme d'agglomérats que l'on veut obtenir en pulvérisant sur un entraîneur d'air pulvérulent solide à 20 °C un tensioactif non ionique liquide à 20°C, et en mélangeant intimement la poudre ainsi modifiée.

**2.** Entraîneur d'air avec poussiérage réduit selon la revendication 1, dans lequel
l'entraîneur d'air pulvérulent solide à 20 °C est choisi dans le groupe constitué par l'alkylsulfate de sodium, l'alkylbenzène sulfonate de sodium et le sulfonate de naphtalène.

**3.** Entraîneur d'air avec poussiérage réduit selon la revendication 1, dans lequel
on utilise du laurylsulfate de sodium comme entraîneur d'air pulvérulent solide à 20 °C.

**4.** Entraîneur d'air avec poussiérage réduit selon l'une des revendications 1 à 3, dans lequel
on choisit les tensioactifs non ioniques liquides à 20 °C dans le groupe constitué par les produits d'addition d'oxyde d'éthylène et/ou d'oxyde de propylène sur des alcools gras comportant de 8 à 24 atomes de carbone, des alkyl polyglycosides des polyéthylèneglycols et de polypolyglycoléthers.

**5.** Procédé d'obtention d'entraîneur d'air avec poussiérage réduit pour systèmes de mortier, de plâtre et d'enduit, masses de ciments, béton et similaires,
**caractérisé en ce qu'**
on pulvérise sur un entraîneur d'air pulvérulent solide à 20 °C un tensioactif non ionique liquide à 20 °C, et on mélange intimement la poudre ainsi modifiée.

**6.** Procédé selon la revendication 5, selon lequel
on effectue simultanément la pulvérisation et le mélange au moyen de malaxeurs équipés d'organes de mélange à mouvement tourbillonnaire et d'un dispositif de pulvérisation.

**7.** Utilisation de poudres tensioactives avec poussiérage réduit que l'on peut obtenir en pulvérisant sur un tensioactif pulvérulent solide à 20 °C un tensioactif non ionique liquide à 20 °C et en mélangeant intimement la poudre ainsi modifiée, comme entraîneurs d'air avec poussiérage réduit pour systèmes de mortier, masses de ciment et d'enduit, masses de ciments, du béton et similaires.

**8.** Utilisation de tensioactifs non ioniques liquides à 20 °C comme additifs liant la poussière pour des entraîneurs d'air avec poussiérage réduit dans des systèmes de mortier, de plâtre et d'enduit, de masses de ciment, du béton et similaires